# EUROPEAN PATENT APPLICATION

(11) **EP 0 782 348 A2**
(43) Date of publication of application: **02.07.1997**
(21) Application number: 96309203.6
(22) Date of filing: 17.12.1996
(51) Int. Cl.: H04N 9/804

(54) **Apparatus and method for processing nonstandard sync signal in video signal processing system**

(30) Priority: 27.12.1995 KR 9559466
(71) Applicant: Samsung Electronics Co., Ltd., Suwon-city, Kyungki-do (KR)
(72) Inventor: Kim, Yong-je, Jangahn-gu, Suwon-city, Kyungki-do (KR)
(74) Representative: Chugg, David John

(57) **Abstract**

There is disclosed a nonstandard sync signal processing apparatus for a video signal processing system, including: a signal separator (100) separating a composite sync signal of a video signal into horizontal and vertical sync signals; a horizontal period counter (210) counting a clock signal for a given horizontal period and producing a horizontal value; a vertical period counter (220) counting a clock signal for a given vertical period and producing a vertical value; an error detector (230) detecting if an error occurs in the horizontal sync signal by comparing it with the horizontal value, and detecting if an error occurs in the vertical sync signal by comparing it with the vertical value; a first data converter (270) converting the video signal of a period prior to where the erroneous horizontal sync signal occurs into corresponding digital data if the error detector (230) determines that the horizontal sync signal is erroneous; and a second data converter (270) converting the video signal of a horizontal period prior to where the erroneous vertical sync signal occurs, into corresponding digital data if the error detector (230) determines that the vertical sync signal is erroneous.

## Description

The present invention relates to a video signal processing system that records/plays back a video signal in response to a sync signal, and more particularly, to an apparatus and a method for processing a video signal and allowing it to be normally displayed on a screen even if a nonstandard sync signal is generated.

The present application for an apparatus and method for processing nonstandard sync signal in video signal processing system, is based on Korean Application No. 59466/1995.

In a video signal processing system such as a digital video cassette recorder (DVCR), a digital camcoder and the like, a video signal can be recorded from outside on a recording medium such as a magnetic tape in response to a sync signal attained from the video signal, and the recorded video signal can be played back by the use of the sync signal. If there is an error in the sync signal of the input video signal in such a video signal processing system, particularly in a digital video cassette recorder, errors also occur in a pilot frame signal used for recording and a track pair number used during playback, and this acts as a principal cause of the damage to the video signal displayed on the screen at the time of playback.

The erroneous sync signal also adversely affects the sequence of addresses for reading/writing of a memory of the video signal processing system, and induces the reading of incorrect data from the memory and/or the writing of data into wrong locations of the memory. As a result, this also does damage to the video signal displayed on the screen at the time of playback.

Accordingly, it is an aim of embodiments of the present invention to provide an apparatus and a method for processing and allowing a video signal to be normally reproduced on a screen even if a nonstandard sync signal is generated.

It is another aim of embodiments of the present invention to provide an apparatus and a method for processing and allowing a video signal to be normally recorded on magnetic medium even if a nonstandard sync signal is generated.

According to a first aspect of the invention, there is provided a nonstandard sync signal processing apparatus for a video signal processing system, the apparatus comprising: signal separating means for separating a composite sync signal of a predetermined video signal into horizontal and vertical sync signals; horizontal period counting means for counting a clock signal for a predetermined horizontal period and generating a first horizontal value; and error detecting means for detecting if an error occurs in the horizontal sync signal by comparing the first horizontal value with the horizontal sync signal.

Preferably, the error detecting means comprises: first comparing means for comparing the first horizontal value with the horizontal sync signal of the input video signal, generating the first horizontal value as a second horizontal value if the compared two signals coincide with each other and generating a first error signal if the two signals do not coincide with each other.

Preferably, vertical period counting means are provided for counting a clock signal for a predetermined vertical period and generating a first vertical value, said error detecting means further detects if an error occurs in the first vertical sync signal by comparing the vertical value with the vertical sync signal and data converting means for converting the input video signal into digital video data are provided.

Preferably, the apparatus comprises: vertical period counting means for counting the clock signal for a predetermined vertical period in response to the second horizontal value and generating a first vertical value; second comparing means, forming part of the error detecting means, for comparing the first vertical value with the vertical sync signal of the input video signal, generating the first vertical value as a second vertical value if the compared two signals coincide with each other, and generating a second error signal if the two signals do not coincide with each other; and data converting means for converting the input video signal into digital video data.

Said data converting means may convert the input video signal into either digital video data synchronized to the second horizontal and second vertical values or digital video data corresponding to whether it is the first or second error signal which is received.

The data converting means may comprise: first data converting means for converting the video signal of a period prior to where an erroneous horizontal sync signal is generated into corresponding digital data if the error detecting means determines that the horizontal sync signal is erroneous; and second data converting means for converting the video signal of a horizontal period prior to where an erroneous vertical sync signal is generated into corresponding digital data if the error detecting means determines that the vertical sync signal is erroneous.

The data converting means may comprise: first data output means for converting the video signal of a period prior to where an erroneous horizontal sync signal is generated into corresponding digital data and outputting the digital data if the error detecting means determines that the horizontal sync signal is erroneous; and second data output means for producing predetermined digital video data, instead of the video signal of a period where an erroneous vertical sync signal is generated, if the error detecting means determines that the vertical sync signal is erroneous.

Said second data output means may produce blue or grey video data instead of the video signal of the period where the error occurs.

The apparatus may further comprise: signal generating means for producing a frame pulse and repeat recording instruction signal for recording repetition in response to generation of the first or second error signal; ID generating means for producing a pilot frame in response to the output frame pulse; a memory for storing digital data; address generating means for producing a write address and a write enable signal indicating a location in the memory into which the digital video data generated from the data converting means is written by the use of the second horizontal and vertical values, and generating a read address and a read enable signal indicating a location in the memory which the data written into the memory is read out of; compressing means for compressing the video data produced from the memory; and error correction coding/modulating means for performing error correction coding and modulating operations as to the compressed video data in response to the pilot frame and the repeat recording instructions signal.

According to a second aspect of the invention, there is provided a method for processing a non-standard sync signal in a system for transmitting an externally applied video signal to a predetermined medium, the method comprising the steps of: separating a composite sync signal of the video signal into horizontal and vertical sync signals; comparing a first horizontal value produced by counting a clock signal for a predetermined horizontal period with the input horizontal sync signal, and detecting if the first horizontal value coincides with the input horizontal sync signal; and converting the video signal of the period prior to where the erroneous horizontal sync signal is generated into corresponding digital data and transmitting the digital data to the medium, when the horizontal sync signal is erroneous.

Said comparing step may further include comparing a first vertical value produced by counting a clock signal for a predetermined vertical period with the input vertical sync signal and detecting if the first vertical value coincides with the input vertical sync signal.

The method may further comprise the step of: converting the video signal of a horizontal period prior to where the erroneous vertical sync signal is generated into corresponding digital data and transmitting the digital data to the medium, when the vertical sync signal is erroneous.

The method may comprise the step of: converting predetermined digital video data instead of the video signal of the period where the erroneous vertical sync signal is generated into corresponding digital data and transmitting the digital data to the medium, when the vertical sync signal is erroneous.

For a better understanding of the invention, and to show how embodiments of the same may be carried into effect, reference will now be made, by way of example, to the accompanying diagrammatic drawings, in which:
Figure 1 is a block diagram illustrating a nonstandard sync signal processing apparatus in accordance with an embodiment of the present invention;
Figure 2 shows the detailed construction of a system controller of Figure 1; and
Figures 3A and 3B are views for explaining the operation of embodiments of the present invention compared to the operation of a conventional technique.

A preferred embodiment of the present invention will be described in detail with reference to the accompanying drawings.

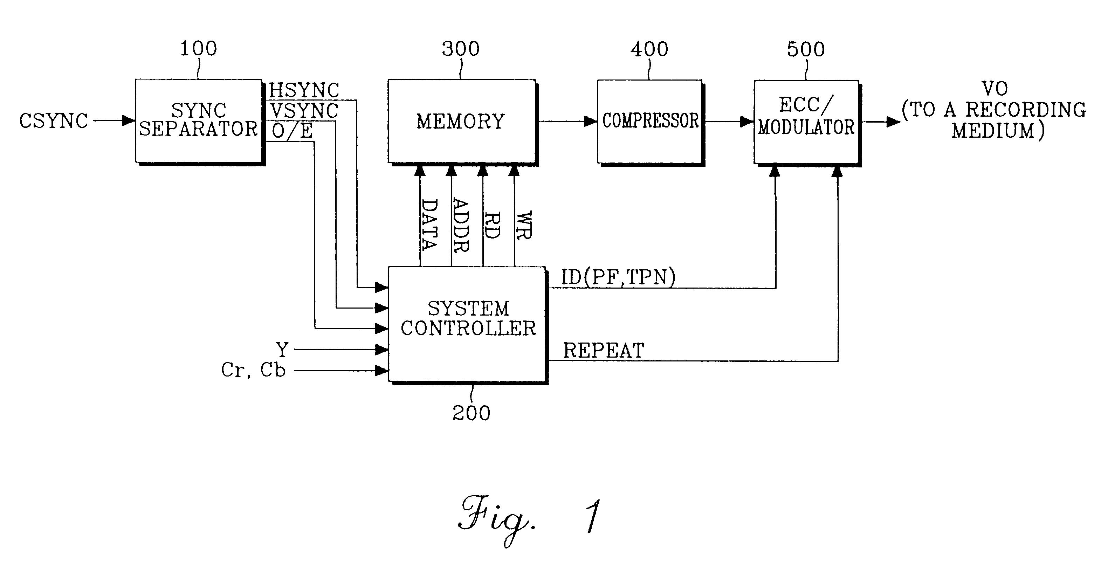

Figure 1 is a block diagram of a nonstandard sync signal processing apparatus in accordance with an embodiment of the present invention, and illustrates the construction of a nonstandard sync signal processing apparatus employed in a digital video cassette recorder (DVCR) by way of example.

Once a composite sync signal CSYNC is applied to a sync separator 100, the sync separator 100 separates the composite sync signal CSYNC into a horizontal sync signal HSYNC, a vertical sync signal VSYNC, and a field indicating signal O/E which is indicative of an odd field or an even field, and then produces the above three signals to a system controller 200. The system controller 200 determines if the separated sync signals are in normal state, in other words, determines if there is an error in each of the sync signals. Even in case the system controller 200 determines that there is an error in the separated sync signals, it allows a pilot frame signal PF, ID required for recording and a track pair number TPN, ID for playback to be normally produced.

In other words, when the horizontal sync signal HSYNC is in an abnormal state, the system controller 200 holds data of a period prior to where the erroneous sync signal occurs, and allows the data to be written into a memory 300. In case that there is an error in the vertical sync signal VSYNC or the field indicating signal O/E, the system controller 200 allows either data of a field prior to where the erroneous sync signal is produced or blue or gray data to be written into the memory 300. By processing the data in the above manner when erroneous sync signals are produced, the system controller 200 properly generates an address signal ADDR, a read enable signal RD and a write enable signal WR in response to the erroneous sync signals.

Data DATA is written into the memory 300 in response to the address ADDR and write enable signal WR produced by the system controller 200, and the data being stored in the memory 300 is provided to a compressor 400 by the address ADDR and read enable signal RD. The data DATA generated by the system controller 200 is indicative of digital luminance data and color difference data into which the system controller 200 converts an externally applied analog luminance signal Y and color difference signals Cr and Cb.

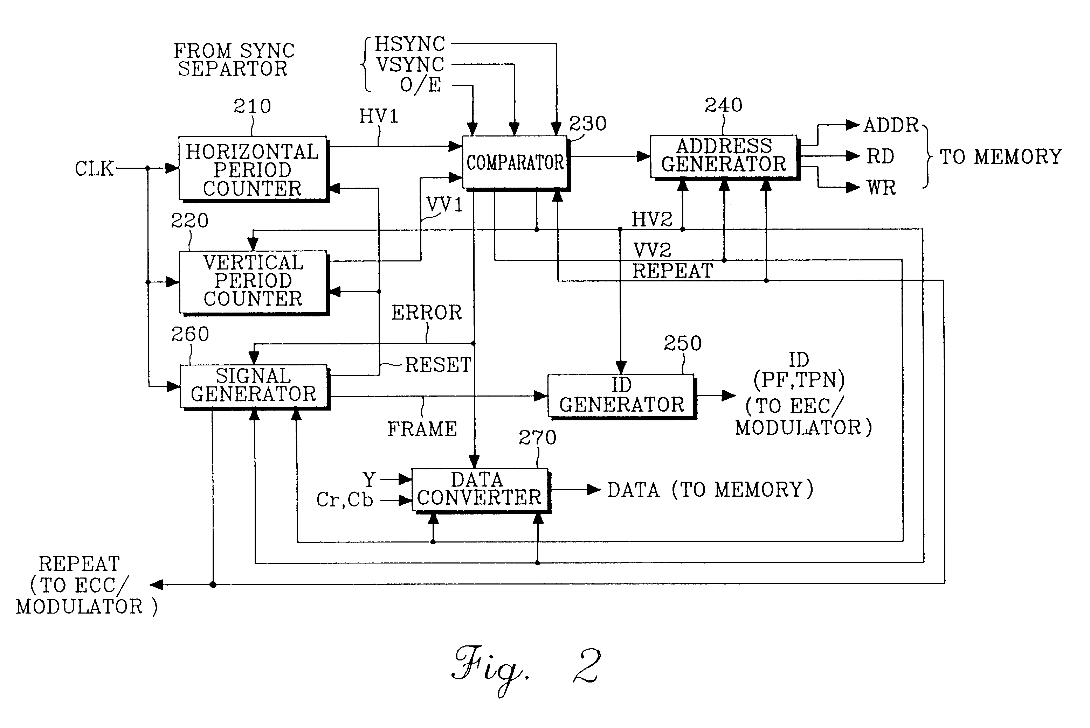

The compressor 400 processes the data produced by the memory 300 by means of a discrete cosine transform, quantization and variable length coding and outputs data with a reduced number of binary digits. When the data compressed by the compressor 400 is input to an error correction coder/modulator 500, the error correction coder/modulator 500 adds a predetermined parity to the data and modulates the data to produce a video output VO. The video output VO is recorded on recording medium. IDs PF and TPN and repeat recording instructions signal REPEAT are now discussed with reference to Figure 2.

Figure 2 depicts the detailed construction of the system controller 200 of Figure 1. The system controller 200 includes a horizontal period counter 210, a vertical period counter 220, an error detecting means shown as comparator 230, an address generator 240, an ID generator 250, a signal generator 260, and a data converter 270.

Referring to Figure 2, when the horizontal sync signal HSYNC, vertical sync signal VSYNC and field indicating signal O/E are input to the system controller 200 from the sync separator 100, the horizontal and vertical period counters 210 and 220 are initialized, and the horizontal period counter 210 counts a clock signal CLK for a predetermined horizontal period. When the frequency of the clock signal CLK is 13.5MHz, according to the NTSC system, the horizontal period counter 210 generates a first horizontal value HV1 that is a pulse form of a logic "low" level at every period of 858 clocks. For example, the first horizontal value HV1 maintains a logic "high" or "low" level for active periods (720 clocks) regulated in accordance with CCIR601. The first horizontal value HV1 may maintain the logic "high" or "low" level for the periods except for the above active ones. The first horizontal value HV1 is applied to the comparator 230 and is compared with the horizontal sync signal HSYNC from the sync separator 100. If it turns out that the first horizontal value HV1 coincides with the horizontal sync signal HSYNC, the comparator 230 produces to the vertical period counter 220 a second horizontal value HV2 that is the pulse form of the logic "low" level for one clock at every period of 858 clocks.

The vertical period counter 220 increases a vertical period counter value in response to the clock CLK whenever the second horizontal value HV2 is once input thereto. If a vertical period is constructed by the increase of the vertical period counter value, the vertical period counter 220 produces a first vertical value VV1 to the comparator 230. The vertical period is equivalent to 262.5 times (525 lines/2) one period (1H) of the horizontal sync signal. For example, the first vertical value VV1 maintains the logic "high" or "low" level for active periods (240 H), and maintains the logic "low" or "high" level for the periods except for the above active ones.

The comparator 230 determines if the first vertical value VV1 from the vertical period counter 220 corresponds to the vertical sync signal VSYNC from the sync separator 100. If it turns out that the first vertical value VV1 coincides with the vertical sync signal VSYNC, the comparator 230 produces to the signal generator 260 a second vertical value VV2 corresponding to this period. The signal generator 260 receives the output second vertical value VV2 and produces a frame signal FRAME to produce it to the ID generator 250. The signal generator 260 also produces a reset signal RESET to the horizontal and vertical period counters 210 and 220 for initialization.

Meanwhile, the comparator 230 which detects error occurrence with horizontal and vertical sync signals HSYNC and VSYNC and the field indicating signal O/E, determines that an error occurs in a certain field, the comparator 230 produces an error signal ERROR to the signal generator 260 and the data converter 270. The signal generator 260 counts the error signal ERROR, and if a first error signal ERROR is counted, the signal generator 260 produces the frame signal FRAME for the period where the horizontal sync signal HSYNC or vertical sync signal VSYNC should be actually. In other words, the signal generator 260 generates a frame signal FRAME which can be substituted for the sync signal for the period when the erroneous horizontal or vertical sync signal HSYNC or VSYNC is produced.

The ID generator 250 can normally generate the pilot frame PF and track pair number TPN in response to the frame signal FRAME. Since the pilot frame PF is normally produced even in the period where the erroneous sync signal exists, the video signal can be normally recorded on the recording medium. The recorded video signal can be played back by the track pair number TPN which is generated in normal way and displayed on the screen without damage.

The data converter 270 detects if there is an erroneous horizontal or vertical sync signal HSYNC or VSYNC in response to application of the error signal ERROR. In case that an error occurs in the horizontal sync signal HSYNC, the data converter 270 holds a pixel value of a period prior to where the erroneous horizontal sync signal HSYNC occurs, and controls it to be produced as the data DATA. In case that there is an error in the vertical sync signal VSYNC or field indicating signal O/E, the data converter 270 holds a pixel value of a period prior to where the erroneous vertical sync signal VSYNC or erroneous field indicating signal O/E is produced, and controls it to be produced as the data DATA. Or the data converter 270 may allow a value of blue or gray data to be produced as the data DATA, instead of the data of the erroneous vertical period.

In addition to the above, if there is a nonstandard sync signal, the data converter 270 writes into the memory 300 the data DATA of a field prior to where the erroneous sync signal is generated, and discards the data DATA after the field where the erroneous sync signal is produced. For example, if the erroneous sync signal is produced at a first field, the data converter 270 discards the data of the next second field. If the erroneous sync signal is produced at a second field, the data converter 270 controls the data of the preceding field to be written into the memory.

When the data of the next field is input, the data converter 270 initializes the system controller 200 and controls it to repeat the initial operation in such a manner that data of the preceding frame is repeatedly written into the memory by a frame memory of the ECC/modulator 500. The signal for this operation is a repeat recording instructions signal REPEAT produced by the signal generator 260. Once the repeat recording instructions signal REPEAT is produced by the signal generator 260, the output of data stored in the memory 300 before the compressor 400 is discarded, and data of the preceding frame stored in the frame memory of the ECC/modulator 500 comes to be output.

Accordingly, the data of the entire frame where the error occurs is replaced with the data of a different frame so that a normal picture can be played back.

The ID generator 250 outputs the track pair number TPN per one track (48H), and produces a pilot frame PF per one frame. When there is an error in the sync signal, the data of the preceding frame stored in the frame memory of the ECC/modulator 500 is used as the track pair number TPN, and data produced after the data of the preceding frame is toggled is used as the pilot frame PF. In addition, when there is an error in the sync signal, the address generator 240 is initialized to a pulse of the next frame in response to the repeat recording instructions signal REPEAT, and is then normally actuated.

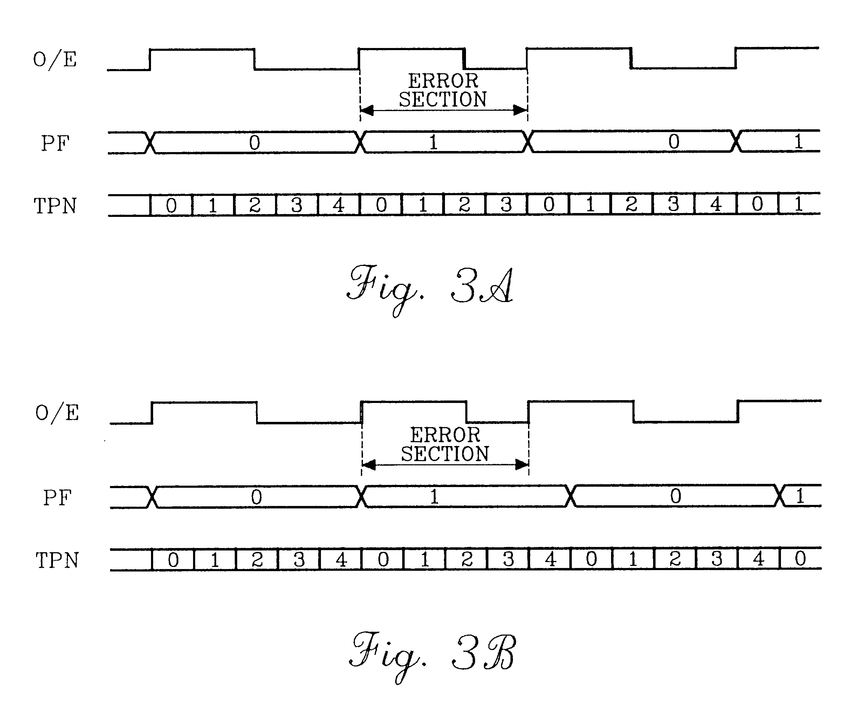

Figures 3A and 3B respectively depict the operations of respective signals according to a conventional art and the present invention.

Figure 3A illustrates IDs such as the pilot frame PF and track pair number TPN produced when an error occurs in the vertical sync signal VSYNC. According to the conventional art, when there is an error in the vertical sync signal VSYNC, the pilot frame PF indicates "1" in the period where the erroneous sync signal occurs, and the track pair numbers TPN produced for this period are 0, 1, 2 and 3, as shown in Figure 3A. According to the present invention, however, the pilot frame PF indicates "1" after the erroneous field, and the track pair numbers TPN 0, 1, 2 and 3 corresponding to the pilot frame PF are generated.

In accordance with the present invention, the data of the preceding frame is recorded on recording medium or a predetermined value of data is recorded thereon while there is an error in the sync signal so that the video signal recorded on the recording medium can be played back in normal condition.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A nonstandard sync signal processing apparatus for a video signal processing system, the apparatus comprising:
signal separating means (100) for separating a composite sync signal of a predetermined video signal into horizontal and vertical sync signals (HSYNC, VSYNC);
horizontal period counting means (210) for counting a clock signal (CLK) for a predetermined horizontal period and generating a first horizontal value (HV1); and
error detecting means (230) for detecting if an error occurs in the horizontal sync signal by comparing the first horizontal value with the horizontal sync signal.

2. An apparatus according to claim 1, wherein the error detecting means (230) comprises:
first comparing means for comparing the first horizontal value (HV1) with the horizontal sync signal (HSYNC) of the input video signal, generating the first horizontal value (HV1) as a second horizontal value (HV2) if the compared two signals coincide with each other and generating a first error signal (ERROR) if the two signals do not coincide with each other.

3. An apparatus according to claim 1 or 2, further comprising:
vertical period counting means (220) for counting a clock signal CLK for a predetermined vertical period and generating a first vertical value (VV1) and, wherein, said error detecting means further detects if an error occurs in the vertical sync signal by comparing the first vertical value (VV1) with the vertical sync signal (VSYNC); and
data converting means (270) for converting the input video signal into digital video data.

4. An apparatus according to claim 2, further comprising:
vertical period counting means (220) for counting the clock signal (CLK) for a predetermined vertical period in response to the second horizontal value (HV2) and generating a first vertical value (VV1);
second comparing means, forming part of the error detecting means (230), for comparing the first vertical value (VV1) with the vertical sync signal (VSYNC) of the input video signal, generating the first vertical value (VV1) as a second vertical value (VV2) if the compared two signals coincide with each other, and generating a second error signal (ERROR) if the two signals do not coincide with each other; and
data converting means (270) for converting the input video signal into digital video data.

5. An apparatus according to claim 4, wherein said data converting means (270) converts the input video signal into either digital video data synchronized to the second horizontal (HV2) and second vertical (VV2) values or digital video data corresponding to whether it is the first or second error signal which is received.

6. An apparatus according to claim 3, 4 or 5, wherein the data converting means (270) comprises:
first data converting means for converting the video signal of a period prior to where an erroneous horizontal sync signal (HSYNC) is generated into corresponding digital data (DATA) if the error detecting means determines that the horizontal sync signal (HSYNC) is erroneous; and
second data converting means for converting the video signal of a horizontal period prior to where an erroneous vertical sync signal (VSYNC) is generated into corresponding digital data if the error detecting means (230) determines that the vertical sync signal is erroneous.

7. An apparatus according to claim 3, 4 or 5, wherein said data converting means (270) comprises:
first data output means for converting the video signal of a period prior to where an erroneous horizontal sync signal (HSYNC) is generated into corresponding digital data (DATA) and outputting the digital data (DATA) if the error detecting means (230) determines that the horizontal sync signal (HSYNC) is erroneous; and
second data output means for producing predetermined digital video data (DATA), instead of the video signal of a period where an erroneous vertical sync signal (VSYNC) is generated, if the error detecting means (230) determines that the vertical sync signal (VSYNC) is erroneous.

8. An apparatus according to claim 7, wherein said second data output means produces blue video data instead of the video signal of the period where the error occurs.

9. An apparatus according to claim 7, wherein said second data output means produces gray video data instead of the video signal of the period where the error occurs.

10. An apparatus according to claim 4 or 5, further comprising:
signal generating means (260) for producing a frame pulse (FRAME) and repeat (REPEAT) recording instruction signal for recording repetition in response to generation of the first or second error signal (ERROR);
ID generating means (250) for producing a pilot frame (PF) in response to the output frame pulse (FRAME);
a memory (300) for storing digital data;
address generating means (240) for producing a write address (ADDR) and a write enable signal (WR) indicating a location in the memory (300) into which the digital video data generated from the data converting means (270) is written by the use of the second horizontal (HV2) and vertical (VV2) values, and generating a read address (ADDR) and a read enable (RD) signal indicating a location in the memory (300) which the data written into the memory (300) is read out of;
compressing means (400) for compressing the video data produced from the memory (300); and
error correction coding/modulating means (500) for performing error correction coding and modulating operations as to the compressed video data in response to the pilot frame (PF) and the repeat (REPEAT) recording instructions signal.

11. A method for processing a non-standard sync signal in a system for transmitting an externally applied video signal to a predetermined medium, the method comprising the steps of:
separating a composite sync signal of the video signal into horizontal and vertical sync signals (HSYNC, VSYNC);
comparing a first horizontal value (HV1) produced by counting a clock signal (CLK) for a predetermined horizontal period with the input horizontal sync signal (HSYNC), and detecting if the first horizontal value (HV1) coincides with the input horizontal sync signal (HSYNC); and
converting the video signal of the period prior to where an erroneous horizontal sync signal (HSYNC) is generated into corresponding digital data (DATA) and transmitting the digital data (DATA) to the medium, when the horizontal sync signal (HSYNC) is erroneous.

12. A method according to claim 11, wherein said comparing step further includes comparing a first vertical value (W1) produced by counting a clock signal (CLK) for a predetermined vertical period with the input vertical sync signal (VSYNC) and detecting if the first vertical value (VV1)coincides with the input vertical sync signal (VSYNC).

13. A method according to claim 12, further comprising the step of:
converting the video signal of a horizontal period prior to where the erroneous vertical sync signal (VSYNC) is generated into corresponding digital data (DATA) and transmitting the digital data (DATA) to the medium, when the vertical sync signal (VSYNC) is erroneous.

14. A method according to claim 12, further comprising the step of:
converting predetermined digital video data instead of the video signal of the period where the erroneous vertical sync signal is generated into corresponding digital data (DATA) and transmitting the digital data (DATA) to the medium, when the vertical sync signal is erroneous.
